# EUROPEAN PATENT SPECIFICATION

(11) **EP 3 145 013 B1**
(45) Date of publication and mention of the grant of the patent: **08.11.2017**
(21) Application number: 16184893.2
(22) Date of filing: 19.08.2016
(51) Int. Cl.: H01M 8/0612, H01M 8/04701, H01M 8/04014, H01M 8/04007, H01M 8/04223, H01M 8/124

(54) **FUELL CELL SYSTEM**
BRENNSTOFFZELLENSYSTEM
SYSTÈME DE PILE À COMBUSTIBLE

(30) Priority: 15.09.2015 JP 2015182205
(43) Date of publication of application: 22.03.2017
(73) Proprietor: AISIN SEIKI KABUSHIKI KAISHA, Kariya-shi, Aichi 448-8650 (JP)
(72) Inventor: FUNATSU, Yoshinori, Kariya-shi, Aichi 448-8650 (JP); ENDO, Satoshi, Kariya-shi, Aichi 448-8650 (JP); KATSU, Hiroaki, Kariya-shi, Aichi 448-8650 (JP)
(74) Representative: TBK

(56) References cited:
- EP-A2- 1 411 573
- JP-A- 2013 065 506
- JP-A- 2013 171 636
- US-A1- 2006 039 854

## Description

### TECHNICAL FIELD

This disclosure relates to a fuel cell system.

### BACKGROUND DISCUSSION

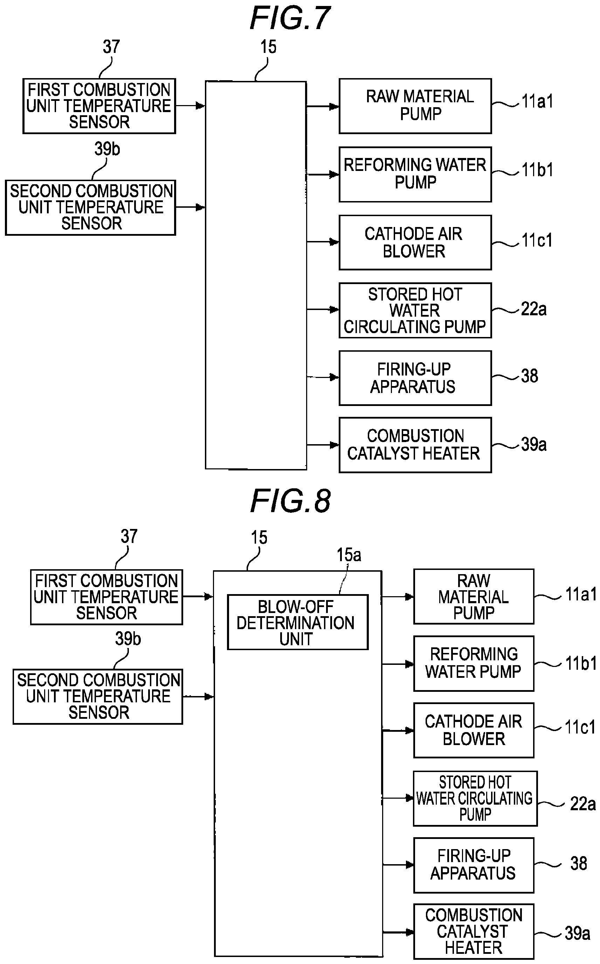

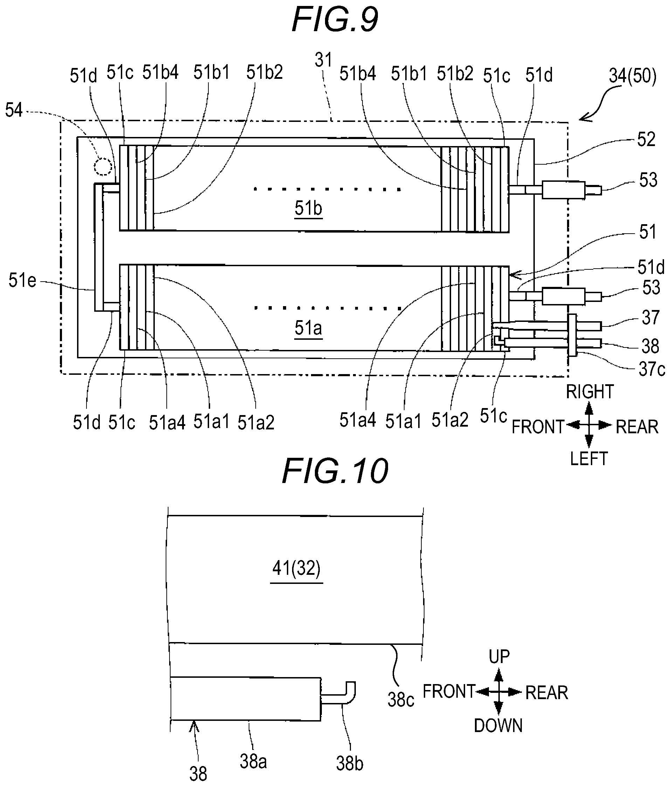

There is a fuel cell system disclosed in JP 2013-65506A (Reference 1) and JP 2013-171636A (Reference 2) as a type of a known fuel cell system. As illustrated in Fig. 7 of Reference 1 and Fig. 10 of Reference 2, a firing-up apparatus of the fuel cell system performs spark discharge in a discharge unit formed between a pair of electrodes to ignite combustible gas led out from a fuel cell and fire up a combustion unit. The fuel cell system of Reference 2 has the features set forth in the preamble of claim 1.

There is a demand for a reduction in cost in a fuel cell system in order to increase the diffusion of the fuel cell system.

### SUMMARY

Thus, a need exists for achieving cost reduction of the fuel cell system provided with a firing-up apparatus that performs discharge so as to fire up a combustion unit.

A fuel cell system according to an aspect of this disclosure includes the features set forth in claim 1.

In the fuel cell system according to the aspect of claim 1, the evaporating unit includes a first casing having conductivity, the reforming unit includes a second casing having conductivity, the fuel cell system further includes a temperature sensor that includes a temperature detection unit detecting a temperature of the combustion unit and a third casing having conductivity and accommodating the temperature detection unit, and the grounding electrode is one of the first casing, the second casing, and the third casing.

In the fuel cell system according to the aspect of claim 2, the third casing and the discharge electrode may be formed in a rod-like shape, the firing-up apparatus may further include a support member that supports the third casing and the discharge electrode to be parallel with each other along a longitudinal direction; and the grounding electrode may correspond to the third casing.

In the fuel cell system according to the aspect of claim 3, the firing-up apparatus may ignite the combustible gas led out from a lead-out port, whose distance from the reforming gas supply pipe to the fuel flow passage of the fuel cell is shortest and through which a great amount of the combustible gas is led out, of the plurality of lead-out ports of the combustible gas.

In the fuel cell system according to the aspect of claim 4, the firing-up apparatus may ignite the combustible gas led out from a lead-out port, whose distance from the reforming gas supply pipe to the fuel flow passage of the fuel cell is longest and through which a small amount of the combustible gas is led out, of the plurality of lead-out ports of the combustible gas.

According to the aspect of claim 1, the grounding electrode is formed by a member capable of being installed in the combustion unit and the discharge electrode is arranged in the combustion unit and thus, the firing-up apparatus is able to stably fire up the combustion unit. It is possible to further reduce the number of components of the firing-up apparatus and the fuel cell system compared to a case where the grounding electrode is formed by a rod-like conductor as in the firing-up apparatus of the related art. Therefore, it is possible to achieve cost reduction in the fuel cell system.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic diagram illustrating an outline of a first embodiment of a fuel cell system disclosed here;
Fig. 2 is a transverse cross-sectional view of a fuel cell module illustrated in Fig. 1;
Fig. 3 is a side cross-sectional view of the fuel cell module illustrated in Fig. 1;
Fig. 4 is a top view illustrating the inside (especially, evaporating unit and reforming unit) of the fuel cell module illustrated in Fig. 2 and Fig. 3;
Fig. 5 is a top view illustrating the inside (especially, fuel cell and firing-up apparatus) of the fuel cell module illustrated in Fig. 2 and Fig. 3;
Fig. 6 is a longitudinal cross-sectional view of a first combustion unit temperature sensor and a firing-up apparatus illustrated in Fig. 5;
Fig. 7 is a block diagram of the fuel cell system illustrated in Fig. 1;
Fig. 8 is a block diagram of a fuel cell system according to a second embodiment disclosed here;
Fig. 9 is a top view illustrating the inside (especially, fuel cell and firing-up apparatus) of a fuel cell module according to the second embodiment disclosed here; and
Fig. 10 is a partially enlarged cross sectional view illustrating a modification example of a firing-up apparatus of respective embodiments disclosed here.

### DETAILED DESCRIPTION

### First Embodiment

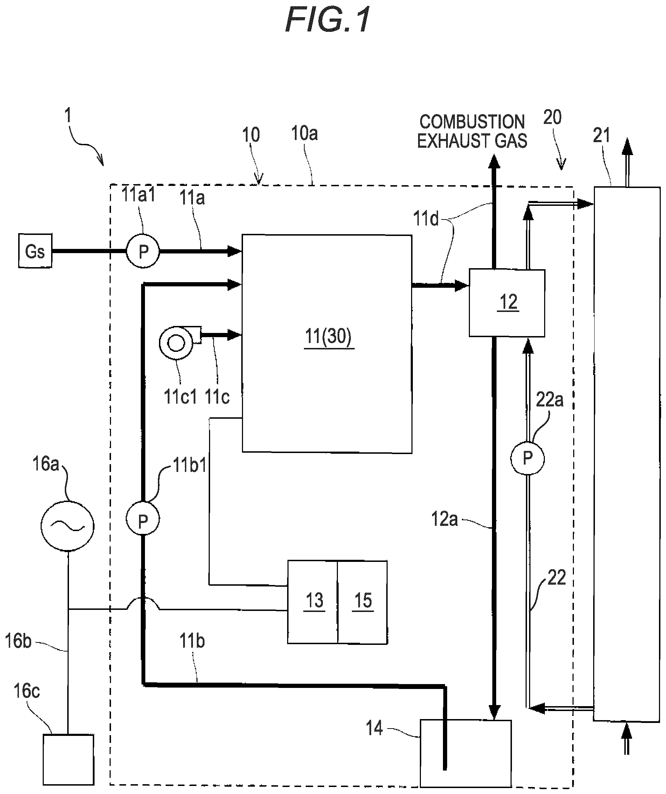

Hereinafter, an embodiment of a fuel cell system disclosed here will be described. As illustrated in Fig. 1, a fuel cell system 1 includes an electric power generation unit 10 and a hot water storage tank 21.

The electric power generation unit 10 includes a case 10a, a fuel cell module 11 (30), a heat exchanger 12, a power conversion device 13, a water tank 14, and a control device 15. The fuel cell module 11, the heat exchanger 12, the power conversion device 13, the water tank 14, and the control device 15 are accommodated in the case 10a.

The fuel cell module 11 is configured to include at least a fuel cell device 34 (50) which will be described later. Reforming raw material, reforming water, and cathode air (oxidizer gas) are supplied to the fuel cell module 11. Specifically, the fuel cell module 11 is connected to the other end of a reforming raw material supply pipe 11a whose one end is connected to a supply source Gs to be supplied with the reforming raw material. The reforming raw material supply pipe 11a is provided with a raw material pump 11a1. Furthermore, the fuel cell module 11 is connected to the other end of a water supply pipe 11b whose one end is connected to the water tank 14 to be supplied with the reforming water. The water supply pipe 11b is provided with a reforming water pump 11b1. The fuel cell module 11 is connected to the other end of a cathode air supply pipe 11c whose one end is connected to a cathode air blower 11c1 to be supplied with cathode air.

The heat exchanger 12 is a heat exchanger to which combustion exhaust gas exhausted from the fuel cell module 11 is supplied and stored hot water from a hot water storage tank 21 are supplied and in which heat exchange is performed between the combustion exhaust gas and the stored hot water. The hot water storage tank 21 stores hot water and is connected with a stored hot water circulation line 22 in which the stored hot water is circulated (circulated in a direction denoted by an arrow in Fig. 1). A stored hot water circulating pump 22a and the heat exchanger 12 are arranged on the stored hot water circulation line 22 in this order from a lower end toward an upper end.

The heat exchanger 12 is connected with (penetratingly provided with) an exhaust pipe 11d extending from the fuel cell module 11. The heat exchanger 12 is connected with a condensed water supply pipe 12a connected to the water tank 14. In the heat exchanger 12, the combustion exhaust gas from the fuel cell module 11 is introduced into the heat exchanger 12 through the exhaust pipe 11d, subjected to the heat exchange with the stored hot water, cooled down, and the water vapor contained in the combustion exhaust gas is condensed. The combustion exhaust gas after being cooled down is discharged to the outside through the exhaust pipe 11d. The condensed water is supplied to the water tank 14 through the condensed water supply pipe 12a. In the water tank 14, the condensed water is purified by ion exchange resin.

An exhaust heat recovery system 20 is constituted with the heat exchanger 12 described above, the hot water storage tank 21, and the stored hot water circulation line 22. The exhaust heat recovery system 20 recovers the exhaust heat of the fuel cell module 11 into the stored hot water so as to be accumulated.

The power conversion device 13 receives a DC voltage which is output from the fuel cell device 34 as an input, converts the input DC voltage into a predetermined AC voltage, and outputs the predetermined AC voltage to a power source line 16b connected to an AC system power source 16a and an external power load 16c (for example, electrical products). The power conversion device 13 receives AC voltage from the system power source 16a through the power source line 16b as an input, converts the AC voltage into a predetermined DC voltage, and outputs the DC voltage to an auxiliary machine (each pump, blower, or the like) or the control device 15. Otherwise, the power conversion device 13 receives a DC voltage of the fuel cell device 34 and outputs the DC voltage to an auxiliary machine (each pump, blower, or the like) or the control device 15. The control device 15 drives the auxiliary machine to control the operation of the fuel cell system 1.

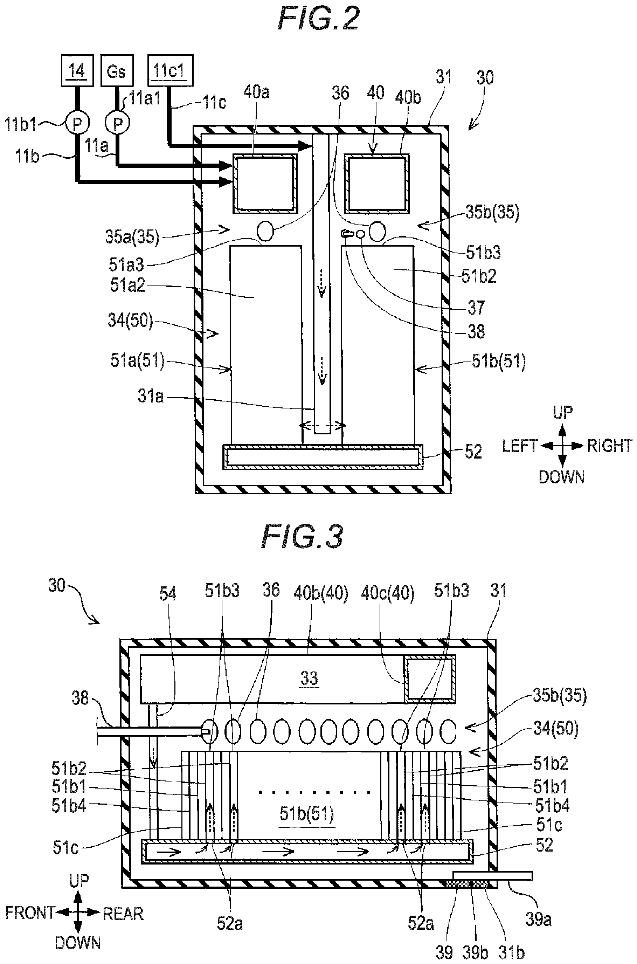

The fuel cell module 11 (30) is a solid oxide fuel cell module. The fuel cell module 30 includes a housing 31, an evaporating unit 32, a reforming unit 33, the fuel cell device 34 (50), and a first combustion unit 35 (which corresponds to a combustion unit disclosed here). For the convenience of description in the present specification, description will be made on the assumption that an upper side and a lower side in Fig. 2 are the above and the below of the fuel cell module 30, respectively, and similarly, the left side and the right side in Fig. 2 are the left and the right of the fuel cell module 30, respectively, and the front side and the inner side of a paper surface are the front and the rear of the fuel cell module 30, respectively. Respective directions are illustrated by arrows in Fig. 2 to Fig. 6, Fig. 9 and Fig. 10.

As illustrated in Fig. 2 and Fig. 3, the housing 31 is made of conductive metal (for example, alloy steel or carbon steel) in a box shape and is provided with insulating material. The evaporating unit 32 and the reforming unit 33 are arranged to be located above the fuel cell device 34.

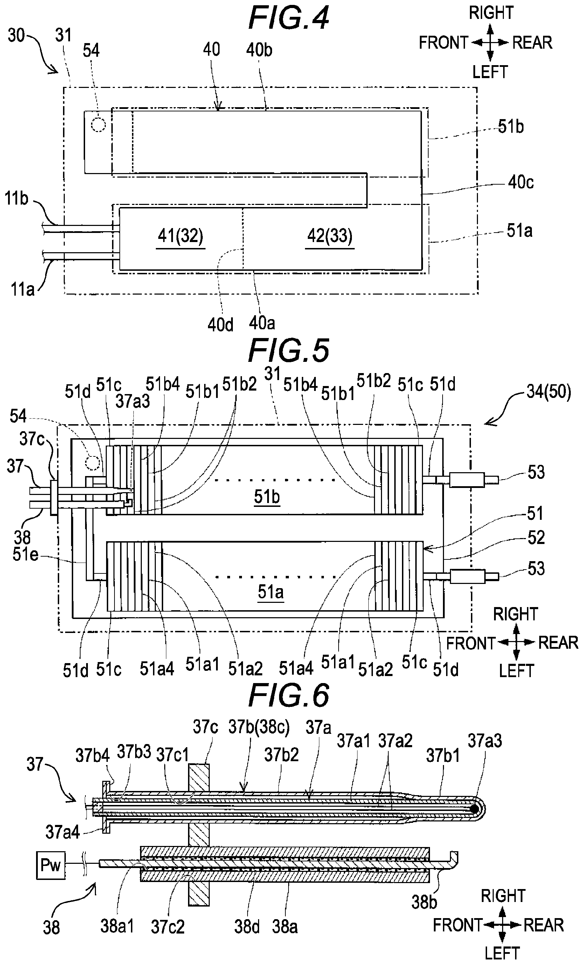

The other end of the reforming raw material supply pipe 11a and the other end of the water supply pipe 11b are connected to the evaporating unit 32 (see Fig. 4). The evaporating unit 32 is heated by combustion gas to be described later, evaporates the condensed water supplied as reforming water from the water tank 14 through the water supply pipe 11b, and generates water vapor (reforming water vapor), and leads out the water vapor. The evaporating unit 32 preheats the reforming raw material supplied through the reforming raw material supply pipe 11a. The evaporating unit 32 mixes the water vapor (reforming water vapor) generated by evaporating the reforming water (condensed water) and the preheated reforming raw material to be led out to the reforming unit 33. The reforming raw material includes natural gas, a reforming gas fuel such as LPG, and a reforming liquid fuel such as kerosene, gasoline, methanol, or the like, and description will be made on natural gas in the embodiment disclosed here.

The reforming unit 33 generates reforming gas from the reforming raw material and the water vapor (reforming water vapor). Specifically, the reforming unit 33 generates reforming gas from the mixed gas (reforming raw material and reforming water vapor) supplied from the evaporating unit 32 and leads out the reforming gas by being supplied with heat required for a reforming reaction of water vapor heated by the combustion gas to be described later. The reforming unit 33 is filled with the catalyst (for example, Ru or Ni based catalyst) and mixed gas therein is reacted by the catalyst to be reformed and hydrogen gas and carbon monoxide gas are generated (so-called water vapor reforming reaction). At the same time, a so-called carbon monoxide shift reaction, in which the carbon monoxide gas and the water vapor, that are generated by water vapor reforming reaction, are reacted with each other and respectively converted into hydrogen gas and carbon dioxide gas, occurs. The gas (reforming gas) generated as described above is led out to the fuel cell device 34. The reforming gas contains hydrogen, carbon monoxide, carbon dioxide, water vapor, unreformed natural gas (methane gas), and the reforming water (water vapor) not used for reforming. The water vapor reforming reaction is an endothermic reaction and the carbon monoxide shift reaction is an exothermic reaction.

The evaporating unit 32 and the reforming unit 33 described above are formed in a casing 40 as illustrated in Fig. 4. The casing 40 is formed in a planar U-shape by a first rectangular parallelepiped 40a and a second rectangular parallelepiped 40b, that are extending along the front-rear direction, and a connecting part 40c that connects rear ends of the rectangular parallelepiped 40a and the rectangular parallelepiped 40b. The casing 40 is made of conductive metal (for example, alloy steel or carbon steel). The casing 40 is formed in a square section inside of which is a cavity. Inside of the casing 40 is partitioned into an evaporating unit casing 41 (which corresponds to a first casing disclosed here) and a reforming unit casing 42 (which corresponds to a second casing disclosed here) by a side wall 40d formed inside of the first rectangular parallelepiped 40a as a boundary therebetween so as to allow gas to pass. The evaporating unit 32 is formed in the evaporating unit casing 41 and the reforming unit 33 is formed in the reforming unit casing 42. Thus, the evaporating unit casing 41 is integrally formed with the reforming unit casing 42. The first rectangular parallelepiped 40a is arranged above a first stack 51a (which will be described later). The second rectangular parallelepiped 40b is arranged above a second stack 51b (which will be described later) (see Fig. 2 to Fig. 4).

The fuel cell device 34 (50) includes, as illustrated in Fig. 2, Fig. 3, and Fig. 5, a fuel cell 51, a manifold 52, and an electrode 53. The fuel cell device 50 includes two electrodes 53 (see Fig. 5). The fuel cell 51 generates electric power using the reforming gas and the oxidizer gas. The oxidizer gas is, for example, air (cathode air) in the present embodiment. The fuel cell according to the present embodiment is a solid oxide fuel cell and uses zirconium oxide which is a kind of solid oxide as an electrolyte. Hydrogen, carbon monoxide, methane gas, or the like are supplied as fuel to a fuel electrode of the fuel cell 51. An operating temperature is approximately 400°C to 1000°C. The fuel cell 51, as illustrated in Fig. 5, includes a first stack 51a, a second stack 51b, a stack supporting member 51c, a current lead-out member 51d, and a connecting member 51e.

The stacks 51a and 51b are configured in such a way that a plurality of cells 51a1 and 51b1 formed with a fuel electrode, an air electrode (oxidizer electrode), and an electrolyte interposed between the electrodes are stacked along the front-rear direction (see Fig. 3 and Fig. 5). Fuel flow passages 51a2 and 51b2 through which the reforming gas, which is fuel, passes are formed at the fuel electrode sides of the cells 51a1 and 51b1. Anode off gas (which will be described later) is led out from the lead-out ports 51a3 and 51 b3 of the upper end of the fuel flow passages 51a2 and 51b2 (see Fig. 2). Air flow passages 51a4 and 51b4 through which air (cathode air) passes are formed at the air electrode sides of the cells 51a1 and 51b1. The two stacks 51a and 51b are arranged in parallel in the front-rear direction as the direction in which the cells 51a1 and 51b1 are stacked.

The stack supporting members 51c, as illustrated in Fig. 5, are arranged in the front end and the rear end of the stacks 51a and 51b, respectively, and support the stacks 51a and 51b, respectively. The stack supporting members 51c are made of conductive material to be formed in a planar shape, and are bonded to ends of the stacks 51a and 51b by, for example, a conductive adhesive, respectively.

The current lead-out members 51d lead out electric current generated by electric power generation of the cells 51a1 and 51b1. The current lead-out members 51d are made of conductive material to be formed in a plate shape extending in the front-rear direction. The current lead-out members 51d are integrally formed with the stack supporting members 51c.

The connecting member 51e is made of conductive material and connects the current lead-out members 51d provided in the front ends of the stacks 51a and 51b. The stacks 51a and 51b are arranged on the same end sides of the stacks 51a and 51b in a state where polarities become reverse to each other. With this, the connecting member 51e electrically connects the stacks 51a and 51b in series.

The fuel cell 51 is provided on a manifold 52. The manifold 52 is formed in a box shape the inside of which is a cavity. The reforming gas from the reforming unit 33 is supplied to the manifold 52 through a reforming gas supply pipe 54 as illustrated in Fig. 3 (see an arrow of a broken line). The reforming gas supply pipe 54 is made of conductive metal (for example, alloy steel or carbon steel). One end (upper end) of the reforming gas supply pipe 54 is connected to the front end part of the reforming unit casing 42 (the second rectangular parallelepiped 40b). The other end (lower end) of the reforming gas supply pipe 54 is connected in front of the second stack 51b in the manifold 52 (see Fig. 5). The reforming gas from the reforming unit 33 circulates in the inside of the manifold 52 and is led out from the plurality of openings 52a formed on the upper side wall (see an arrow of a solid line). The lower ends of the fuel flow passages 51a2 and 51b2 are connected to the plurality of openings 52a in an airtight manner. The reforming gas led out from the plurality of openings 52a is introduced into the fuel flow passages 51a2 and 51b2 from the lower ends thereof and led out from the fuel lead-out ports 51a3 and 51b3 as anode off gas (which will be described later).

On the other hand, the cathode air (air) is supplied to the air flow passages 51a4 and 51b4 through the air supply pipe 31a as illustrated by the broken line in Fig. 2. The air supply pipe 31a communicates with the other end of the cathode air supply pipe 11c and leads out the cathode air from the cathode air supply pipe 11c to one end (lower ends) of the air flow passages 51a4 and 51b4. The air supply pipe 31a is made of conductive metal (for example, alloy steel or carbon steel) to be integrally formed with the housing 31. The air supply pipe 31a is formed to be suspended from the inner side of the upper wall of the housing 31 and to be run between the stacks 51a and 51b. The cathode air is introduced from one end (lower ends) of the air flow passages 51a4 and 51b4 and led out from the other end (upper ends) thereof.

The other end of the reforming gas supply pipe 54 is connected in the front of the second stack 51b in the manifold 52 and thus, a distance from the other end of the reforming gas supply pipe 54 to the fuel flow passage 51b2 of the front end part of the second stack 51b is shortest among the distances from the other end of the reforming gas supply pipe 54 to the respective fuel flow passages 51a2 and 51b2 in the manifold 52. Pressure loss inside of the manifold 52 is proportional to the distance and thus, the pressure loss from the other end of the reforming gas supply pipe 54 to the fuel flow passage 51b2 of the front end part of the second stack 51b is smallest. In a case where flow rates of anode off gases from the respective lead-out ports 51a3 and 51b3 are compared with each other, the flow rate of the anode off gas from the lead-out port 51b3 of the front end part of the second stack 51b is greater than that of the lead-out port 51a3. A distance from the other end of the reforming gas supply pipe 54 to the fuel flow passage 51a2 of the rear end part of the first stack 51a is longest among the distances from the other end of the reforming gas supply pipe 54 to the respective fuel flow passages 51a2 and 51b2. In a case where flow rates of anode off gases from the respective lead-out ports 51a3 and 51b3 are compared with each other, the flow rate of the anode off gas from the lead-out port 51a3 of the rear end part of the first stack 51a is smaller than that of the lead-out port 51b3.

In the fuel cell 51, electric power is generated by the reforming gas supplied to the fuel electrode and the cathode gas supplied to the air electrode. That is, a reaction expressed by the following chemical formula 1 and chemical formula 2 occurs in the fuel electrode and a reaction expressed by the following chemical formula 3 occurs in the air electrode. That is, an oxide ion (O²⁻) generated in the air electrode is transmitted through the electrolyte and reacts with hydrogen in the fuel electrode and thus, electrical energy is generated. Therefore, the reforming gas and the cathode air that have not been used for electric power generation are led out from the fuel flow passages 51a2 and 51b2 (lead-out ports 51a3 and 51b3) and the air flow passages 51a4 and 51b4. Electric power generated by the fuel cell 51 is output to the power conversion device 13 through electrodes 53. The electrodes 53 are connected to the current lead-out members 51d each of which is provided on the rear end part of the stacks 51a and 51b.

(chemical formula 1): H₂ + O²⁻ → H₂O + 2e⁻

(chemical formula 2): CO + O²⁻ → CO₂ + 2e⁻

(chemical formula 3): 1/2O₂ + 2e⁻ → O²⁻

The first combustion unit 35 burns combustible gas led out from the fuel cell 51 between the evaporating unit 32, the reforming unit 33, and the plurality of lead-out ports 51a3 and 51b3 for the combustible gas by oxidizer gas as illustrated in Fig. 2 and Fig. 3. The combustible gas is gas which burns, and is reforming gas (anode off gas) led out from the fuel flow passages 51a2 and 51b2 (lead-out ports 51a3 and 51b3) without being used for electric power generation. The oxidizer gas is air (cathode air (cathode off gas)) led out from the air flow passage 51a4 and 51 b4 without being used for electric power generation. The first combustion unit 35 corresponds to a combustion space in which anode off gas is burned using the oxidizer gas. In the first combustion unit 35, the anode off gas is burned, the combustion gas (flame 36) is generated, and the evaporating unit 32 and the reforming unit 33 are heated by the generated combustion gas.

The combustion unit 35 includes a left combustion unit 35a and a right combustion unit 35b. The left combustion unit 35a, as illustrated in Fig. 2, is arranged between the first rectangular parallelepiped 40a having the evaporating unit 32 therein and the lead-out port 51a3 of the first stack 51a. With this, the left combustion unit 35a heats a portion of the reforming unit 33 and the evaporating unit 32. The right combustion unit 35b is arranged between the second rectangular parallelepiped 40b and the lead-out port 51b3 of the second stack 51b. With this, the right combustion unit 35b heats a portion of the reforming unit 33. Furthermore, the combustion gas heats the inside of the fuel cell module 30 to the operating temperature of the fuel cell 51. In the first combustion unit 35, the anode off gas is burned and combustion exhaust gas is generated. The combustion exhaust gas is exhausted from the fuel cell module 30 through the exhaust port 31b (see Fig. 3).

The fuel cell module 30, as illustrated in Fig. 2, Fig. 3, and Fig. 5, further includes a first combustion unit temperature sensor 37 (corresponds to a temperature sensor disclosed here) and a firing-up apparatus 38.

The first combustion unit temperature sensor 37 is formed in a rod-like shape whose longitudinal direction corresponds to the front-rear direction and detects a temperature of the first combustion unit 35 (right combustion unit 35b). The first combustion unit temperature sensor 37 transmits a temperature detection result to the control device 15. The first combustion unit temperature sensor 37, as illustrated in Fig. 6, includes a sensor unit 37a and a sensor unit protection pipe 37b (corresponds to a third casing disclosed here).

The sensor unit 37a is a sheath thermocouple. The sensor unit 37a includes a sheath 37a1, a pair of wires 37a2, and a temperature detection unit 37a3. The sheath 37a1 is made of stainless steel having conductivity and is formed in a rod-like shape the inside of which is a cavity. The wire 37a2 and the temperature detection unit 37a3 are arranged in the sheath 37a1 and the sheath 37a1 is filled with an insulator such as magnesium powder (not illustrated). The temperature detection unit 37a3 is accommodated in one end (rear end) part within the sheath 37a1 and detects a temperature of a portion where the first combustion unit temperature sensor is arranged. The temperature detection unit 37a3 is arranged to be located in the front end part of the right combustion unit 35b (see Fig. 5) and thus, detects the temperature of the front end part of the right combustion unit 35b.

The sensor unit protection pipe 37b is made of stainless steel having conductivity and is formed in a rod-like shape the inside of which is a cavity. The sensor unit protection pipe 37b accommodates the sensor unit 37a on the inner side thereof. With this, the sensor unit protection pipe 37b protects the sensor unit 37a from the flame 36. The sensor unit protection pipe 37b includes a smaller-diameter portion 37b1 located in the tip end part (rear end part) thereof and a larger diameter portion 37b2 located on the front side of the smaller-diameter portion 37b1. The inner side surface of the smaller-diameter portion 37b1 is formed to be in contact with the outer surface of the sheath 37a1 of the sensor unit 37a. That is, the smaller-diameter portion 37b1 (tip end part (rear end part)) of the sensor unit protection pipe 37b is located in the front end part of the right combustion unit 35b. With this, the temperature of the right combustion unit 35b is reliably transferred to the temperature detection unit 37a3. The sensor unit 37a is detachably accommodated in the sensor unit protection pipe 37b. Specifically, the sensor unit 37a is inserted into or drawn out from an opening part 37b3 formed in the rear end of the sensor unit protection pipe 37b. Furthermore, a flange part 37b4 is formed at the peripheral edge of the rear end of the sensor unit protection pipe 37b. A flange part 37a4 formed at the rear end part of the sensor unit 37a is detachably mounted on the flange part 37b4 by a mounting bolt (not illustrated), for example. With this, a maintenance property of the sensor unit 37a is improved.

The first combustion unit temperature sensor 37 is fixed to the housing 31 through a flange member 37c (corresponds to a support member disclosed here). The flange member 37c is formed in a plate shape and is fixed to the housing 31 in an airtight manner by a mounting bolt (not illustrated), for example. The sensor unit protection pipe 37b is inserted into a through hole 37c1 of the flange member 37c by penetrating therethrough and is fixed in an airtight manner by a silicon-base adhesive, a ceramic-based adhesive, or the like, for example.

The firing-up apparatus 38 performs discharge to thereby ignite the combustible gas (anode off gas) and fire up the first combustion unit 35. Ignition is a phenomena of initiating a combustible target (anode off gas) to be caught on fire. Firing up is that a target (first combustion unit 35) is engulfed in flame in a state where the flame is continuous (combustion state). The firing-up apparatus 38 includes an electrode support member 38a, a discharge electrode 38b, and a grounding electrode 38c.

The electrode support member 38a supports the discharge electrode 38b. The electrode support member 38a is made of insulating material (for example, alumina) and is formed in a rod-like shape whose longitudinal direction corresponds to the front-rear direction. The electrode support member 38a is inserted into a through hole 37c2 of the flange member 37c by penetrating therethrough and is fixed thereto in an airtight manner by a silicon-based adhesive or a ceramic-based adhesive, for example. The electrode support member 38a is fixed in parallel with the first combustion unit temperature sensor 37 along the longitudinal direction. A through hole 38a1 which penetrates through the electrode support member 38a along the longitudinal direction is formed in the electrode support member 38a.

The discharge electrode 38b performs discharge between the discharge electrode 38b and the grounding electrode 38c. The discharge electrode 38b is made of alloy steel having conductivity and is formed in a rod-like shape. The alloy steel is, for example, high-temperature and heat resistant Fe-Cr-Al based alloy for electric-heating (product name: YSS-SYTT). The discharge electrode 38b is configured in such a way that one end part thereof is bent and thus one end (rear end) thereof is directed toward the sensor unit protection pipe 37b. With this, a distance to one end of the discharge electrode 38b among the distances to the sensor unit protection pipe 37b is shortest in the discharge electrode 38b. The discharge electrode 38b is arranged to penetrate through the through hole 38a1 and is fixed in an airtight manner by silicon-based sealing material or epoxy-based sealing material 38d filled in the inner side of the through hole 38a1, for example. With this, the discharge electrode 38b is fixed in parallel with the first combustion unit temperature sensor 37 along the longitudinal direction. The discharge electrode 38b is configured in such a way that one end part (rear end part) thereof is located at the front end part of the right combustion unit 35b (see Fig. 5). One end of the discharge electrode 38b is located above the lead-out port 51b3 of the front end part of the second stack 51b (see Fig. 5).

The other end part (front end part) of the discharge electrode 38b is electrically connected to a power source apparatus Pw (corresponds to a power source disclosed here). In a case of performing discharge, the power source apparatus Pw supplies predetermined electrical power to the discharge electrode 38b according to a control command by the control device 15.

The grounding electrode 38c is formed by a member capable of being installed in the first combustion unit 35. The grounding electrode 38c is formed by the sensor unit protection pipe 37b in the embodiment disclosed here. The sensor unit protection pipe 37b has conductivity as described above and is grounded through an electric wire (not illustrated), for example. In a case where predetermined electric power is supplied to the discharge electrode 38b from the power source apparatus Pw, discharge is performed between one end of the discharge electrode 38b and the grounding electrode 38c due to the potential difference generated between the discharge electrode 38b and the grounding electrode 38c. One end part of the discharge electrode 38b and the tip end part of the grounding electrode 38c are arranged in the front end part of the right combustion unit 35b. In this way, the sensor unit protection pipe 37b corresponds to a member capable of being installed in the first combustion unit 35 disclosed here in the embodiment disclosed here.

As described above, the flow rate of the anode off gas led out from the lead-out port 51b3 of the front end part of the second stack 51b is greater than that of other lead-out ports 51a3 and 51b3 and thus, a flow rate of the anode off gas led out from the front end part of the right combustion unit 35b is greater among other components of the first combustion unit 35. That is, the firing-up apparatus 38 ignites the anode off gas led out from the lead-out port 51b3, through which a greater flow rate of the anode off gas is led out, of the plurality of lead-out ports 51a3 and 51b3. With this, flame 36 is generated, the flame 36 moves, and the first combustion unit 35 is fired up in its entirety.

Furthermore, the housing 31 includes a second combustion unit 39 in an exhaust port 31b as illustrated in Fig. 3. In the second combustion unit 39, the combustible gas (hereinafter, referred to as unburned combustible gas) which is unburned by the first combustion unit 35 is introduced, is burned, and is led out. The unburned combustible gas is, for example, hydrogen, methane gas, carbon monoxide, or the like. The second combustion unit 39 is configured by a combustion catalyst which promotes burning of the unburned combustible gas (for example, ceramic honeycomb catalyst or metal honeycomb noble metal catalyst).

A combustion catalyst heater 39a and a second combustion unit temperature sensor 39b are provided in the second combustion unit 39. The combustion catalyst heater 39a heats the combustion catalyst which promotes burning of the unburned combustible gas. The combustion catalyst heater 39a heats the combustion catalyst to a catalyst activating temperature. The combustion catalyst heater 39a is an alternating current heater (AC heater: AC auxiliary machine) that heats the combustion catalyst by AC current according to instruction from the control device 15.

The second combustion unit temperature sensor 39b detects a temperature of the second combustion unit 39. Specifically, the second combustion unit temperature sensor 39b detects the temperature of a location at which the second combustion unit temperature sensor 39b is arranged in the second combustion unit 39. The second combustion unit temperature sensor 39b transmits the temperature detection result to the control device 15.

The control device 15 controls at least the fuel cell 51. The control device 15, as illustrated in Fig. 7, is connected with respective temperature sensors 37 and 39b, respective pumps 11a1, 11b1, and 22a, the cathode air blower 11c1, the firing-up apparatus 38, and the combustion catalyst heater 39a.

Next, descriptions will made on an example of basic operations in a case where power transmission is performed by the system power supply 16a of the fuel cell system 1 described above. The control device 15 starts a startup operation in a case where a start switch (not illustrated) is depressed to start operation or operation is started according to an operation plan.

When the start up operation is started, the control device 15 activates the auxiliary machine. Specifically, the control device 15 activates the pumps 11a1 and 11b1 and starts supplying of the reforming raw material and the reforming water to the evaporating unit 32. As described above, the mixed gas is generated in the evaporating unit 32 and the mixed gas is supplied to the reforming unit 33. The reforming gas is generated from the supplied mixed gas in the reforming unit 33 and the reforming gas is supplied to the fuel cell 51. The control device 15 performs discharge by using the firing-up apparatus 38. Specifically, the control device 15 allows electrical power from the power source apparatus Pw to be supplied to the discharge electrode 38b to thereby perform discharge between the discharge electrode 38b and the grounding electrode 38c. With this, the reforming gas which is the combustible gas led out from the lead-out port 51 b3 is ignited and thus the first combustion unit 35 is fired up. In a case where the detection temperature detected by the first combustion unit temperature sensor 37 becomes greater than or equal to a first detection temperature (for example, 600°C), the control device 15 determines that the first combustion unit 35 is fired up. If an internal temperature of the reforming unit 33 becomes greater than or equal to an activation temperature (for example, 400°C), the startup operation is finished, and electric power generation operation is started.

The control device 15 controls the auxiliary device such that electric power generated by the fuel cell 51 becomes power consumption of an external power load 16c during the electric power generation operation and supplies the reforming raw material and the cathode air (air) to the fuel cell module 30 and the fuel cell 51. In a case where the power consumption of the external power load 16c exceeds the electric power generated by the fuel cell 51, the shortage of the power capacity is supplemented by receiving electric power from the system power supply 16a.

According to the first embodiment disclosed here, the fuel cell system 1 includes the fuel cell 51 that generates electric power using reforming gas and oxidizer gas, the evaporating unit 32 that generates water vapor from reforming water, the reforming unit 33 that generates reforming gas from the reforming raw material supplied from a supply source Gs and the water vapor supplied from the evaporating unit 32 and supplies the reforming gas to the fuel cell 51, the first combustion unit 35 (right combustion unit 35b) that corresponds to a combustion space in which combustible gas (anode off gas) led out from the fuel cell 51 is burned between the evaporating unit 32, the reforming unit 33, and the plurality of lead-out ports 51a3 and 51b3 of the combustible gas, and a firing-up apparatus 38 that performs discharge to ignite the combustible gas and fire up the first combustion unit 35. The firing-up apparatus 38 includes the grounding electrode 38c and the discharge electrode 38b arranged in the first combustion unit 35 and performs discharge between the grounding electrode 38c and the discharge electrode 38b using the electric power supplied from the power source apparatus Pw, and the grounding electrode 38c is formed by a member capable of being installed in the first combustion unit 35.

The evaporating unit 32 includes the conductive evaporating unit casing 41 and the reforming unit 33 includes the conductive reforming unit casing 42. The fuel cell system 1 further includes the first combustion unit temperature sensor 37 including the temperature detection unit 37a3 that detects the temperature of the first combustion unit 35 and the conductive sensor unit protection pipe 37b in which the temperature detection unit 37a3 is accommodated. The grounding electrode 38c is the sensor unit protection pipe 37b.

Accordingly, the grounding electrode 38c is formed by the sensor unit protection pipe 37b and the discharge electrode 38b is arranged in the first combustion unit 35 and thus, the firing-up apparatus 38 may stably fire up the first combustion unit 35. It is possible to further reduce the number of components of the firing-up apparatus 38 and the fuel cell system 1 compared to a case where the grounding electrode 38c is formed by a rod-like conductor as in the firing-up apparatus of the related art. Therefore, it is possible to achieve cost reduction in the fuel cell system 1.

The sensor unit protection pipe 37b and the discharge electrode 38b are formed in a rod-like shape, the firing-up apparatus 38 further includes the flange member 37c that supports the sensor unit protection pipe 37b and the discharge electrode 38b to be parallel with each other along the longitudinal direction, and the grounding electrode 38c is the sensor unit protection pipe 37b.

Accordingly, the rod-like shaped sensor unit protection pipe 37b that corresponds to the grounding electrode 38c and the rod-like shaped discharge electrode 38b are arranged in parallel with each other in the flange member 37c and thus, it is possible to improve the accuracy of a distance between the electrodes compared to a case where the grounding electrode 38c and the discharge electrode 38b are respectively arranged in separate members. A discharge condition may be maintained to be constant and thus, stabilization of ignition of combustible gas may be achieved.

The firing-up apparatus 38 ignites the combustible gas led out from the lead-out port 51b3, through which a greater amount of the combustible gas (anode off gas) is led out, of the plurality of lead-out ports 51a3 and 51b3.

Accordingly, it is easy for the firing-up apparatus 38 to ignite the combustible gas compared to a case where the combustible gas is led out from the lead-out port 51a3, through which a relatively smaller amount of the combustible gas is led out, of the plurality of lead-out ports 51a3 and 51b3. Accordingly, the relatively simple ignition of combustible gas may be performed.

### Second Embodiment

Next, description will be made mainly on portions of a second embodiment of the fuel cell system disclosed here different from those of the first embodiment. In the second embodiment, the control device 15 further includes a blow-off determination unit 15a (see Fig. 8) compared to the first embodiment described above.

The blow-off determination unit 15a determines whether the first combustion unit 35 is blown off up or not. Blowing off of the first combustion unit 35 is that a combustion state of at least a portion of the first combustion unit 35 is ended. When the first combustion unit 35 is in the combustion state during the startup operation and the electric power generation operation of the fuel cell system 1, in a case where at least a portion of the first combustion unit 35 is blown off, the flow rate of the unburned combustible gas described above to be burned by the second combustion unit 39 is increased and thus, the temperature of the second combustion unit 39 is increased. In a case where the detection temperature of the second combustion unit temperature sensor 39b becomes greater than or equal to the second determination temperature, the blow-off determination unit 15a determines that the first combustion unit 35 is blown off. The second determination temperature is derived in advance by being measured by experiments or the like. In a case where the blow-off determination unit 15a determines that the first combustion unit 35 is blown off, the control device 15 causes the firing-up apparatus 38 to perform discharge to thereby reignite the combustible gas (anode off gas) and re-fire up the first combustion unit 35.

On the other hand, in a case where the detection temperature of the second combustion unit temperature sensor 39b is less than the second determination temperature, the blow-off determination unit 15a determines that the first combustion unit 35 is not blown off.

The second embodiment is different from the first embodiment described above in that the firing-up apparatus 38 is arranged in the rear end part of the left combustion unit 35a. Specifically, as illustrated in Fig. 9, one end part (front end part) of the discharge electrode 38b and the tip end part (front end part) of the grounding electrode 38c (sensor unit protection pipe 37b) are fixed to be located at the rear end part of the left combustion unit 35a. One end of the discharge electrode 38b is located above the lead-out port 51a3 of the rear end part of the first stack 51a.

As described above, the flow rate of anode off gas led out from the lead-out port 51a3 of the rear end part of the first stack 51a is smaller compared to the other lead-out ports 51a3 and 51b3 and thus, the flow rate of the anode off gas led out from the rear end part of the left combustion unit 35a of the first combustion unit 35 is smaller. That is, the firing-up apparatus 38 ignites the anode off gas led out from the lead-out port 51a3, through which a smaller amount of the anode off gas is led out, of the plurality of lead-out ports 51a3 and 51b3. Blowing off of the first combustion unit 35 occurs relatively easily in a portion above the lead-out ports 51a3 and 51b3, through which a smaller amount of the anode off gas is led out, of the first combustion unit 35. Accordingly, the firing-up apparatus 38 performs a discharge in the portion where blowing off of the first combustion unit 35 occurs relatively easily.

According to the second embodiment, the firing-up apparatus 38 ignites the combustible gas (anode off gas) led out from the lead-out port 51a3, through which a smaller amount of the combustible gas is led out, of the plurality of lead-out ports 51a3 and 51b3.

Accordingly, as described above, the firing-up apparatus 38 may perform discharge in the portion where blowing off of the first combustion unit 35 relatively easily occur. Thus, even in a case where a portion of the first combustion unit 35 is blown off in a space that is formed between the lead-out port 51a3, through which a relatively smaller amount of the combustible gas is allowed to lead out, and the reforming unit casing 42, and that corresponds to the portion where blowing off of the first combustion unit 35 relatively easily occur, it is possible to relatively easily reignite the combustible gas.

In the embodiments described above, although an example of the fuel cell system 1 is illustrated, the fuel cell system disclosed here is not limited thereto, and may adopt other configuration. For example, in the embodiments described above, although the grounding electrode 38c is configured by the sensor unit protection pipe 37b, the grounding electrode 38c may be configured by one of the evaporating unit casing 41 and the reforming unit casing 42, instead. In this case, one of the evaporating unit casing 41 and the reforming unit casing 42 is grounded and as illustrated in Fig. 10, one end part of the discharge electrode 38b is bent toward one of the evaporating unit casing 41 and the reforming unit casing 42. With this, discharge is performed in a space formed between one of the evaporating unit casing 41 and the reforming unit casing 42 and the discharge electrode 38b. Accordingly, in a case of the modification example, one of the evaporating unit casing 41 and the reforming unit casing 42 corresponds to a member capable of being installed in the first combustion unit 35 according to the embodiment disclosed here.

In the embodiments described above, although the first combustion unit temperature sensor 37 includes the sensor unit protection pipe 37b, the first combustion unit temperature sensor 37 may not include the sensor unit protection pipe 37b, instead. In this case, the grounding electrode 38c is configured by the sheath 37a1. That is, in this case, the sheath 37a1 corresponds to a third casing disclosed here. In this case, the sheath 37a1 is fixed to the through hole 37c1 of the flange member 37c.

In the second embodiment described above, although a portion where blowing off of the first combustion unit 35 easily occurs is used as a portion where a smaller lead-out amount of the combustible gas (anode off gas) is generated, a portion where a flow speed of the anode off gas is high may be used, instead. In this case, the firing-up apparatus 38 ignites the anode off gas led out from the portion where the flow speed of the anode off gas is high.

In the embodiments described above, although the lead-out ports 51a3 and 51b3 are formed on the upper end of the fuel flow passage of the fuel cell 51, the lead-out ports 51a3 and 51b3 may be formed to be separated from the fuel cell 51 instead. In this case, the fuel cell system 1 may further include a combustible circulation pipe (not illustrated) whose one end is connected to the upper ends of the fuel flow passages 51a2 and 51b2 and the other end thereof forms the lead-out ports 51a3 and 51b3. In this case, the lead-out ports 51a3 and 51b3 may be formed on a portion other than the upper end of the fuel cell 51 and thus, a degree of freedom for a position of the first combustion unit 35, a shape, and an arrangement position of the evaporating unit 32 and the reforming unit 33 is increased.

Furthermore, the shape of the casing 40, the positional relationship between the evaporating unit casing 41, the reforming unit casing 42, and the fuel cell 51 (stacks 51a and 51b), the arrangement positions of the evaporating unit 32 and the reforming unit 33, the located position of the reforming gas supply pipe 54, and the arrangement position or number of the firing-up apparatus 38 and the first combustion unit temperature sensor 37 may be changed in a range without departing from a gist of the embodiment disclosed here.
The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive.

## Claims

1. A fuel cell system (1) comprising:
a fuel cell (51) that generates electric power using reforming gas and oxidizer gas;
an evaporating unit (32) that generates water vapor from reforming water and includes a first casing (41) having conductivity;
a reforming unit (33) that generates the reforming gas from a reforming raw material supplied from a supply source (Gs) and the water vapor supplied from the evaporating unit (32) and includes a second casing (42) having conductivity;
a reforming gas supply pipe (54) that supplies the reforming gas to a fuel flow passage (51a2, 51b2) of the fuel cell (51);
a combustion unit (35) that corresponds to a combustion space in which combustible gas led out from the fuel cell (51) is burned between the evaporating unit (32), the reforming unit (33), and a plurality of lead-out ports (51a3, 51b3) for the combustible gas;
a firing-up apparatus (38) that performs discharge to ignite the combustible gas and fire up the combustion unit (35); and
a temperature sensor (37) that includes a temperature detection unit (37a3) detecting a temperature of the combustion unit (35),
wherein the firing-up apparatus (38) includes a grounding electrode (38c) and a discharge electrode (38b) arranged in the combustion unit (35) and performs the discharge between the grounding electrode (38c) and the discharge electrode (38b) using electric power supplied from a power source (PW),
**characterized in that**
the temperature sensor (37) includes a third casing (37b) having conductivity and accommodating the temperature detection unit (37a3), and
the grounding electrode (38c) is one of the first casing (41), the second casing (42), and the third casing (37b).

2. The fuel cell system (1) according to claim 1,
wherein the third casing (37b) and the discharge electrode (38b) are formed in a rod-like shape,
wherein the firing-up apparatus (38) further includes a support member (37c) that supports the third casing (37b) and the discharge electrode (38b) to be parallel with each other along a longitudinal direction, and
wherein the grounding electrode (38c) corresponds to the third casing (37b).

3. The fuel cell system (1) according to claim 1 or 2,
wherein the firing-up apparatus (38) has an end part of the discharge electrode (38b) and an end part of the grounding electrode (38c) located above a lead-out port (51b3), whose distance from the reforming gas supply pipe (54) to the fuel flow passage (51b2) of the fuel cell (51) is shortest and through which a great amount of the combustible gas is led out, of the plurality of lead-out ports (51a3, 51b3) for the combustible gas.

4. The fuel cell system (1) according to claim 1 or 2,
wherein the firing-up apparatus (38) has an end part of the discharge electrode (38b) and an end part of the grounding electrode (38c) located above a lead-out port (51a3) whose distance from the reforming gas supply pipe (54) to the fuel flow passage (51a2) of the fuel cell (51) is longest and through which a small amount of the combustible gas is led out, of the plurality of lead-out ports (51a3, 51b3) for the combustible gas.

## Patentansprüche

1. Brennstoffzellensystem (1) mit:
einer Brennstoffzelle (51), die unter Verwendung von Reformiergas und Oxidationsmittelgas elektrischen Strom erzeugt;
einer Verdampfungseinheit (32), die aus Reformierwasser Wasserdampf erzeugt und ein erstes Gehäuse (41) aufweist, das Leitfähigkeit hat;
einer Reformiereinheit (33), die das Reformiergas aus einem Reformierausgangsmaterial, das von einer Zuführungsquelle (Gs) aus zugeführt wird, und dem Wasserdampf, der von der Verdampfungseinheit (32) aus zugeführt wird, erzeugt und ein zweites Gehäuse (42) aufweist, das Leitfähigkeit hat;
einem Reformiergaszuführungsrohr (54), das das Reformiergas einem Brennstoffströmungsdurchgang (51a2, 51b2) der Brennstoffzelle (51) zuführt;
einer Verbrennungseinheit (35), die einem Verbrennungsraum entspricht, in dem brennbares Gas, das aus der Brennstoffzelle (51) herausgeführt wird, zwischen der Verdampfungseinheit (32), der Reformiereinheit (33) und einer Vielzahl von Herausführungsöffnungen (51a3, 51b3) für das brennbare Gas verbrannt wird;
einer Anfeuerungsvorrichtung (38), die eine Entladung durchführt, um das brennbare Gas zu zünden und die Verbrennungseinheit (35) anzufeuern; und
einem Temperatursensor (37), der eine Temperaturerfassungseinheit (37a3) aufweist, die eine Temperatur der Verbrennungseinheit (35) erfasst,
wobei die Anfeuerungsvorrichtung (38) eine Erdungselektrode (38c) und eine Entladungselektrode (38b) aufweist, die in der Verbrennungseinheit (35) angeordnet sind, und die Entladung zwischen der Erdungselektrode (38c) und der Entladungselektrode (38b) durchführt, indem sie elektrischem Strom verwendet, der von einer Stromquelle (PW) aus zugeführt wird,
**dadurch gekennzeichnet, dass**
der Temperatursensor (37) ein drittes Gehäuse (37b) aufweist, das Leitfähigkeit hat und die Temperaturerfassungseinheit (37a3) beherbergt, und
die Erdungselektrode (38c) eines von dem ersten Gehäuse (41), dem zweiten Gehäuse (42) und dem dritten Gehäuse (37b) ist.

2. Brennstoffzellensystem (1) nach Anspruch 1,
wobei das dritte Gehäuse (37b) und die Entladungselektrode (38b) in einer stabartigen Form ausgebildet sind,
wobei die Anfeuerungsvorrichtung (38) außerdem ein Tragebauteil (37c) aufweist, die das dritte Gehäuse (37b) und die Entladungselektrode (38b) so trägt, dass sie entlang einer Längsrichtung zueinander parallel sind, und
wobei die Erdungselektrode (38c) dem dritten Gehäuse (37b) entspricht.

3. Brennstoffzellensystem (1) nach Anspruch 1 oder 2,
wobei die Anfeuerungsvorrichtung (38) einen Endteil der Entladungselektrode (38b) und einen Endteil der Erdungselektrode (38c) oberhalb einer Herausführungsöffnung (51b3) der Vielzahl von Herausführungsöffnungen (51a3, 51b3) für das brennbare Gas gelegen hat, deren Abstand vom Reformiergaszuführungsrohr (54) zum Brennstoffströmungsdurchgang (51b2) der Brennstoffzelle (51) am kürzesten ist und durch die eine große Menge des brennbaren Gases herausgeführt wird.

4. Brennstoffzellensystem (1) nach Anspruch 1 oder 2,
wobei die Anfeuerungsvorrichtung (38) einen Endteil der Entladungselektrode (38b) und einen Endteil der Erdungselektrode (38c) oberhalb einer Herausführungsöffnung (51a3) der Vielzahl von Herausführungsöffnungen (51a3, 51b3) für das brennbare Gas gelegen hat, deren Abstand vom Reformiergaszuführungsrohr (54) zum Brennstoffströmungsdurchgang (51a2) der Brennstoffzelle (51) am längsten ist und durch die eine kleine Menge des brennbaren Gases herausgeführt wird.

## Revendications

1. Système de pile à combustible (1) qui comprend :
une pile à combustible (51) qui génère de l'énergie électrique en utilisant un gaz de reformage et un gaz oxydant ;
une unité d'évaporation (32) qui génère de la vapeur d'eau à partir d'eau de reformage et qui comprend un premier boîtier (41) qui présente une conductivité ;
une unité de reformage (33) qui génère le gaz de reformage à partir d'un matériau brut de reformage fourni par une source d'alimentation (Gs) et de la vapeur d'eau fournie par l'unité d'évaporation (32) et qui comprend un deuxième boîtier (42) qui présente une conductivité ;
un tuyau d'alimentation en gaz de reformage (54) qui fournit le gaz de reformage à un passage d'écoulement de combustible (51a2, 51b2) de la pile à combustible (51) ;
une unité de combustion (35) qui correspond à un espace de combustion dans lequel le gaz combustible sorti de la pile à combustible (51) est brûlé entre l'unité d'évaporation (32), l'unité de reformage (33) et une pluralité d'orifices de sortie (51a3, 51b3) pour le gaz combustible ;
un appareil d'amorçage (38) qui effectue une décharge pour enflammer le gaz combustible et amorcer l'unité de combustion (35) ; et
un capteur de température (37) qui comprend une unité de détection de température (37a3) qui détecte une température de l'unité de combustion (35),
dans lequel l'appareil d'amorçage (38) comprend une électrode de mise à la masse (38c) et une électrode de décharge (38b) agencées dans l'unité de combustion (35) et effectue la décharge entre l'électrode de mise à la masse (38c) et l'électrode de décharge (38b) en utilisant l'énergie électrique fournie par une source de puissance (PW),
**caractérisé en ce que**
le capteur de température (37) comprend un troisième boîtier (37b) qui présente une conductivité et qui loge l'unité de détection de température (37a3), et
l'électrode de mise à la masse (38c) est l'un du premier boîtier (41), du deuxième boîtier (42) et du troisième boîtier (37b).

2. Système de pile à combustible (1) selon la revendication 1,
dans lequel le troisième boîtier (37b) et l'électrode de décharge (38b) sont réalisés en une forme similaire à une tige,
dans lequel l'appareil d'amorçage (38) comprend en outre un élément de support (37c) qui supporte le troisième boîtier (37b) et l'électrode de décharge (38b) de manière à ce qu'ils soient parallèles l'un à l'autre le long d'une direction longitudinale, et
dans lequel l'électrode de mise à la masse (38c) correspond au troisième boîtier (37b).

3. Système de pile à combustible (1) selon la revendication 1 ou 2,
dans lequel l'appareil d'amorçage (38) a une partie d'extrémité de l'électrode de décharge (38b) et une partie d'extrémité de l'électrode de mise à la masse (38c) situées au-dessus d'un orifice de sortie (51b3), dont la distance du tuyau d'alimentation en gaz de reformage (54) au passage d'écoulement de combustible (51b2) de la pile à combustible (51) est la plus courte et à travers lequel une grande quantité du gaz combustible est sortie, de la pluralité d'orifices de sortie (51a3, 51b3) pour le gaz combustible.

4. Système de pile à combustible (1) selon la revendication 1 ou 2,
dans lequel l'appareil d'amorçage (38) a une partie d'extrémité de l'électrode de décharge (38b) et une partie d'extrémité de l'électrode de mise à la masse (38c) situées au-dessus d'un orifice de sortie (51a3), dont la distance du tuyau d'alimentation en gaz de reformage (54) au passage d'écoulement de combustible (51a2) de la pile à combustible (51) est la plus longue et à travers lequel une petite quantité du gaz combustible est sortie, de la pluralité d'orifices de sortie (51a3, 51b3) pour le gaz combustible.
